(19) Europäisches Patentamt / European Patent Office / Office européen des brevets

(11) EP 3 443 035 B1

(12) # EUROPEAN PATENT SPECIFICATION

(45) Date of publication and mention of the grant of the patent:
**08.01.2020 Bulletin 2020/02**

(21) Application number: **17710569.9**

(22) Date of filing: **17.03.2017**

(51) Int Cl.:
***C08L 23/12*** *(2006.01)* ***C08L 23/14*** *(2006.01)*
***C08F 2/00*** *(2006.01)* ***C08F 210/06*** *(2006.01)*
***C08F 210/16*** *(2006.01)*

(86) International application number:
**PCT/EP2017/056391**

(87) International publication number:
**WO 2017/178191 (19.10.2017 Gazette 2017/42)**

(54) **PROPYLENE POLYMER COMPOSITIONS**

PROPYLEN POLYMERZUSAMMENSETZUNGEN

COMPOSITION DE POLYMÈRES DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2016 EP 16165333**

(43) Date of publication of application:
**20.02.2019 Bulletin 2019/08**

(73) Proprietor: **Basell Poliolefine Italia S.r.l.**
**20121 Milano (IT)**

(72) Inventors:
- **MASSARI, Paola**
  **44122 Ferrara (IT)**
- **CIARAFONI, Marco**
  **44122 Ferrara (IT)**
- **MARTINI, Nicoletta**
  **44122 Ferrara (IT)**
- **TARTARI, Davide**
  **44122 Ferrara (IT)**
- **PANTALEONI, Roberto**
  **44122 Ferrara (IT)**

(74) Representative: **Sacco, Marco et al**
**Basell Poliolefine Italia S.r.l.**
**Intellectual Property**
**P.le Donegani, 12**
**44122 Ferrara (IT)**

(56) References cited:
**WO-A1-2011/035994**
**WO-A1-2012/010678**
**WO-A1-2012/049204**

EP 3 443 035 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The present disclosure relates to a propylene polymer composition having an optimum balance of properties in particular improved impact strength at 0°.

BACKGROUND OF THE INVENTION

As is known, the isotactic polypropylene is endowed with an exceptional combination of excellent properties which render it suitable for a very great number of uses. In order to improve said properties into the propylene stereoregular homopolymerization process have been introduced one or more copolymerization steps or one or more monomer have been introduced in the homopolymer matrix.

WO 05/014713 relates to a heterophasic polyolefin composition comprising (percent by weight):

1) 65-95% of a crystalline propylene polymer selected from propylene homopolymer and random polymer of propylene with 0.1-10% of an $\alpha$-olefin selected from ethylene, a $C_4$-$C_{10}$ alpha-olefin and a mixture thereof, the said polymer being insoluble in xylene at ambient temperature in an amount over 85% and having a polydispersity index ranging from 4 to 13, preferably 4.5 to 12, more preferably 5 to 9, and an intrinsic viscosity value over 2.2 dl/g, preferably 2.2 to 4.5 dl/g; and
2) 5-35% of an elastomeric olefin polymer of ethylene with a C3-CI0 a-olefin and optionally a diene, having an ethylene content ranging from 15 to 85% and an intrinsic viscosity value of at least 1.4 dl/g, preferably from 2.5 to 5 dl/g.

WO 2012/049204 discloses a polypropylene composition comprising (percent by weight):

A) from 60% to 90% of a propylene homopolymer having: i) a polydispersity Index (P.I.) value of from 3.5 to 10.0; ii) a fraction soluble in xylene higher than 90 wt% iii) a MFR from 50 to 200 g/10 min;
B) from 10% to 40%; of a copolymer of propylene with from 30% to 60% of ethylene derived units.

WO2011/035994 discloses a polypropylene composition comprising (percent by weight):

A) 70%-95%, of a propylene homopolymer having a Polydispersity Index (P.I.) from 4.6 to 10, a fraction insoluble in xylene at 25 °C, higher than 90%, and MFR from 15 to 50 g/10 min;
B) 5%-30%, of a copolymer of propylene containing from 38% to 46% of ethylene derived units; the composition having an intrinsic viscosity of the fraction soluble in xylene at 25 °c comprised between 3 and 5 dl/g.

SUMMARY OF THE INVENTION

The applicant found that it is possible to achieve improved properties especially in term of impact strength at 0°C by using a particular class of propylene composition.

The object of the present disclosure is a propylene polymer composition comprising:

A) from 60wt% to 75wt%, of a propylene homopolymer having a Polydispersity Index (P.I.) value of from 4.3 to 4.9, a fraction insoluble in xylene at 25 °C, higher than 95 %, and MFR (Melt Flow Rate according to ISO 1133, condition L, i.e. 230°C and 2.16 kg load) ranging from 20 to 75 g/10 min;
B) from 25wt % to 40wt%, of a copolymer of propylene with from 46.0wt% to 49.0 wt%; of ethylene derived units; the composition having an intrinsic viscosity of the fraction soluble in xylene at 25 °C comprised between 2.2 and 2.9 dl/g; and the relation:

$$10.7+1.3xMFRa-17.7xP.I.-29.3xIV+4.9xXs \qquad (I)$$

is comprised between 40 and 66; wherein

MFRa is the melt flow rate of the component A) (Melt Flow Rate according to ISO 1133, condition L, i.e. 230°C and 2.16 kg load)

P.I. is the polydispersity index of component A);
IV is the intrinsic viscosity of the fraction soluble in xylene at 25 °C; and
Xs is the a fraction soluble in xylene at 25°C.
and wherein the amount of A+B is equal to 100wt%

## DETAILED DESCRIPTION OF THE INVENTION

The object of the present disclosure is a propylene polymer composition comprising:

A) from 60wt% to 75wt%, preferably from 62wt% to 72wt%, more preferably from 63wt% to 71wt%, of a propylene homopolymer having a Polydispersity Index (P.I.) value of from 4.3 to 4.9, preferably from 4.4 to 4.9; a fraction insoluble in xylene at 25 °C higher than 95wt% more preferably higher than 97wt%; and a MFR (Melt Flow Rate according to ISO 1133, condition L, i.e. 230°C and 2.16 kg load) ranging from 20 to 75 g/10 min, in particular from 25 to 70 g/10 min.;
B) from 25wt % to 40wt%, preferably form 28wt% to 38wt%, more preferably from 29wt% to 37wt% of a copolymer of propylene with from 46.0wt% to 49.0 wt%; preferably from 47.0wt% to 48.5wt%; of ethylene derived units;
the composition having an intrinsic viscosity of the fraction soluble in xylene at 25 °C comprised between 2.2 and 2.9 dl/g; preferably between 2.4 and 2.9 dl/g and a fraction soluble in xylene at 25°C, Xs, comprised between 25.0 wt% and 34.0wt%; preferably between 26.5 wt% and 32.5 wt%; and wherein the results of the following relation (I):

$$10.7+1.3xMFRa-17.7xP.I.-29.3xIV+4.9xXs \text{ (I)} \quad \text{(I)}$$

is comprised between 40 and 66; preferably between 45 and 60; more preferably between 50 and 55; wherein

MFRa is the melt flow rate of the component A) (Melt Flow Rate according to ISO 1133, condition L, i.e. 230°C and 2.16 kg load)
P.I. is the polydispersity index of component A);
IV is the intrinsic viscosity of the fraction soluble in xylene at 25 °C; and
Xs is the a fraction soluble in xylene at 25°C of the composition;
and wherein the amount of A+B is equal to 100wt%

From the above definitions it is evident that the term "copolymer" is limited to polymers containing only propylene and ethylene.

The propylene composition of the present disclosure show an high IZOD value at 0°C, that is higher than 40 KJ/$m^2$ preferably higher than 45 KJ/$m^2$. this is due to the particular balancement of the various feature due to relation (I). In view of these values the propylene composition of the present disclosure is particularly fit for injection molded articles in particular injection molded container to be used at low temperature.

The propylene polymer compositions of the present disclosure is prepared by sequential polymerization in at least two stages, with each subsequent polymerization stage being conducted in the presence of the polymeric material formed in the immediately preceding polymerization reaction, wherein the copolymer (A) is normally prepared in at least one first polymerization stage and the copolymer (B) is normally prepared in at least one second polymerization stage.

Preferably, each polymerization stage is carried out in presence of a highly stereospecific heterogeneous Ziegler-Natta catalyst. The Ziegler-Natta catalysts suitable for producing the propylene polymer compositions of the disclosure comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00163261.

Preferably, the solid catalyst component comprises Mg, Ti, halogen and an electron donor selected from succinates of formula (I):

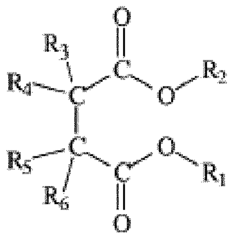

(I)

wherein the radicals $R^1$ and $R^2$, equal to or different from each other, are a $C_1$-$C_{20}$ linear or branched alkyl, alkenyl, cycloalkyl, aryl, arylalkyl or alkylaryl group, optionally containing heteroatoms belonging to groups 15-17 of the periodic table; the radicals $R^3$ to $R^6$ equal to or different from each other, are hydrogen or a $C_1$-$C_2$ linear or branched alkyl, alkenyl, cycloalkyl, aryl, arylalkyl or alkylaryl group, optionally containing heteroatoms, and the radicals $R^3$ to $R^6$ which are joined to the same carbon atom can be linked together to form a cycle.

$R^1$ and $R^2$ are preferably $C_1$-$C_8$ alkyl, cycloalkyl, aryl, arylalkyl and alkylaryl groups.

Particularly preferred are the compounds in which $R^1$ and $R^2$ are selected from primary alkyls and in particular branched primary alkyls. Examples of suitable $R^1$ and $R^2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R^3$ to $R^5$ are hydrogen and $R^6$ is a branched alkyl, cycloalkyl, aryl, arylalkyl and alkylaryl radical having from 3 to 10 carbon atoms. Another preferred group of compounds within those of formula (I) is that in which at least two radicals from $R^3$ to $R^6$ are different from hydrogen and are selected from $C_1$-$C_{20}$ linear or branched alkyl, alkenyl, cycloalkyl, aryl, arylalkyl or alkylaryl group, optionally containing heteroatoms belonging to groups.

Particularly preferred are the compounds in which the two radicals different from hydrogen are linked to the same carbon atom. Furthermore, also the compounds in which at least two radicals different from hydrogen are linked to different carbon atoms, that is $R^3$ and $R^5$ or $R^4$ and $R^6$ are particularly preferred.

According to a preferred method, the solid catalyst component can be prepared by reacting a titanium compound of formula $Ti(OR)_{n-y}X_y$ where n is the valence of titanium and y is a number between 1 and n, preferably TiC4, with a magnesium chloride deriving from an adduct of formula $MgCl_2{\cdot}pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130 "C). Then, the emulsion is quickly quenched, thereby causing the solidification of the adduct in form of spherical particles. Examples of spherical adducts prepared according to this procedure are described in US 4,399,054 and US 4,469,648. The so obtained adduct can be directly reacted with the Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0 °C); the mixture is heated up to 80-130 °C and kept at this temperature for 0.5-2 hours. The treatment with Tic4 can be carried out one or more times. The internal donor can be added during the treatment with $TiCl_4$ and the treatment with the electron donor compound can be repeated one or more times. Generally, the succinate of formula (I) is used in molar ratio with respect to the MgC12 of from 0.01 to 1 preferably from 0.05 to 0.5. The preparation of catalyst components in spherical form is described for example in European patent application EP-A-395083 and in the International patent application WO98144001. The solid catalyst components obtained according to the above method show a surface area (by B.E.T. method) generally between 20 and 500 m21g and preferably between 50 and 400 m21g, and a total porosity (by B.E.T. method) higher than 0.2 cm31g preferably between 0.2 and 0.6 cm31g. The porosity (Hg method) due to pores with radius up to 10.000A generally ranges from 0.3 to 1.5 cm31g, preferably from 0.45 to 1 cm31g.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$ where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1 ,trifluoropropyl-2-ethylpiperidinyl-dimethoxysilane and 1,1,1 ,trifluoropropyl-metildimethoxysilane. The external electron donor compound is used in such an amount to give a molar ratio between the organo-aluminum compound and said electron donor compound of from 0.1 to 500.

The polymerization process can be carried out in gas phase and/or in liquid phase, in continuous or batch reactors, such as fluidized bed or slurry reactors. For example, it is possible to carry out the polymerization of the propylene polymer (A) in liquid phase, using liquid propylene as diluent, while the copolymerization stage to obtain the propylene copolymer fraction (B) is carried out in gas phase, without intermediate stages except for the partial degassing of the monomers. Alternatively, all the sequential polymerization stages can be carried out in gas phase. The reaction time, temperature and pressure of the polymerization steps are not critical, however the temperature for the preparation of fraction (A) and (B), that can be the same or different, is usually from 50°C to 120°C. The polymerization pressure preferably ranges from 0.5 to 12 MPa if the polymerization is carried out in gas-phase. The catalytic system can be pre-contacted (pre-polymerized) with small amounts of olefins. The molecular weight of the propylene polymer composition is regulated by using known regulators, such as hydrogen.

According to a preferred embodiment, the propylene polymer (A) is produced by a gas-phase polymerization process carried out in at least two interconnected polymerization zones. Said polymerization process is described in WO 00/02929.

The process is carried out in a first and in a second interconnected polymerization zone to which propylene and ethylene or propylene and alpha-olefins are fed in the presence of a catalyst system and from which the polymer produced is discharged. The growing polymer particles flow through the first of said polymerization zones (riser) under fast fluidization conditions, leave said first polymerization zone and enter the second of said polymerization zones (downcomer) through which they flow in a densified form under the action of gravity, leave said second polymerization zone and are reintroduced into said first polymerization zone, thus establishing a circulation of polymer between the two polymerization zones. Generally, the conditions of fast fluidization in the first polymerization zone is established by feeding the monomers gas mixture below the point of reintroduction of the growing polymer into said first polymerization zone. The velocity of the transport gas into the first polymerization zone is higher than the transport velocity under the operating conditions and is normally between 2 and 15 m/s In the second polymerization zone, where the polymer flows in densified form under the action of gravity, high values of density of the solid are reached which approach the bulk density of the polymer; a positive gain in pressure can thus be obtained along the direction of flow, so that it becomes possible to reintroduce the polymer into the first reaction zone without the help of mechanical means. In this way, a "loop" circulation is set up, which is defined by the balance of pressures between the two polymerization zones and by the head loss introduced into the system. Optionally, one or more inert gases, such as nitrogen or an aliphatic hydrocarbon, are maintained in the polymerization zones, in such quantities that the sum of the partial pressures of the inert gases is preferably between 5 and 80% of the total pressure of the gases. The operating parameters such as, for example, the temperature are those that are usual in gas-phase olefin polymerization processes, for example between 50°C and 120°C. The process can be carried out under operating pressure of between 0,5 and 10 MPa, preferably between 1.5 and 6 MPa. Preferably, the various catalyst components are fed to the first polymerization zone, at any point of said first polymerization zone. However, they can also be fed at any point of the second polymerization zone. Molecular weight regulators known in the art, particularly hydrogen, can be used to regulate the molecular weight of the growing polymer.

In the second stage of the particularly preferred polymerization process, the propylene/ethylene copolymer (B) is produced in a conventional fluidized-bed gas-phase reactor in the presence of the polymeric material and the catalyst system coming from the preceding polymerization step. The polymerization mixture is discharged from the downcomer to a gas-solid separator, and subsequently fed to the fluidized-bed gas-phase reactor operating under conventional conditions of temperature and pressure.

The propylene polymer compositions of the present disclosure may further comprise additives commonly employed in the polyolefin field, such as antioxidants, light stabilizers, nucleating agents, antiacids, colorants and fillers.

The main application of the propylene polymer compositions of the disclosure is the production of molded articles, particularly injection-molded items. The injection-molded articles comprising the propylene polymer compositions of the disclosure have good flexibility and good impact properties especially at low temperatures.

The following examples are given to illustrate and not to limit the present disclosure

EXAMPLES

The data of the propylene polymer materials were obtained according to the following methods:

**Xylene-soluble faction at 25°C**

The Xylene Soluble fraction was measured according to ISO 16152, 2005, but with the following deviations (between brakets what prescribed by the ISO 16152)
The solution volume is 250 ml (200 ml)

During the precipitation stage at 25°C for 30 min, the solution, for the final 10 minutes, is kept under agitation by a magnetic stirrer (30 min, without any stirring at all)
The final drying step is done under vacuum at 70°C (100 °C)
The content of said xylene-soluble fraction is expressed as a percentage of the original 2.5 grams and then, by difference (complementary to 100), the xylene unsoluble %

**Ethylene (C2) content**

**$^{13}C$ NMR of propylene/ethylene copolymers**

$^{13}C$ NMR spectra were acquired on a Bruker AV-600 spectrometer equipped with cryoprobe, operating at 160.91 MHz in the Fourier transform mode at 120°C.
The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.
The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S$$

$$PPE = 100\ T_{\beta\delta}/S$$

$$EPE = 100\ T_{\delta\delta}/S$$

$$PEP = 100\ S_{\beta\beta}/S$$

$$PEE = 100\ S_{\beta\delta}/S$$

$$EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

$$E\%\ mol = 100 * [PEP+PEE+EEE]'$$

The weight percentage of ethylene content was evaluated using the following equation:

$$E\%\ wt. = \frac{100 * E\%\ mol * MW_E}{E\%\ mol * MW_E + P\%\ mol * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

Ethylene C2 content has been measured on the final composition the ethylene content of component B) is than calculated by using the formula $C2tot=X_BC2_B$ wherein $X_B$ is the amount of component B in the composition.

**Molar ratio of feed gasses**

Determined by gas-chromatography

**Melt flow rate (MFR)**

The melt flow rate MFR of the polymer was determined according to ISO 1133 (230°C, 2.16 Kg).

**Intrinsic viscosity**

Determined in tetrahydronaphthalene at 135°C

**Flexural modulus**

Determined according to IS0 178 and supplemental condition according to ISO 1873-2 with specimen injection moulded

**IZOD Impact Strength**

Determined according to ISO 180/A, with specimen injection moulded according to ISO 1873-2, and according to ISO 3167, notched edgewise (ex condition 1A, of ISO 1873-2 ed. 1989).

**Polydispersity Index (PI):** measurement of molecular weight distribution of the polymer. To determine the PI value, the modulus separation at low modulus value, e.g. 500 Pa, is determined at a temperature of 200 °C by using a RMS-800 parallel plates rheometer model marketed by Rheometrics (USA), operating at an oscillation frequency which increases from 0.01 rad/second to 100 rad/second. From the modulus separation value, the PI can be derived using the following equation:

$$PI = 54.6 \text{ x } (\text{modulus separation})^{-1.76}$$

wherein the modulus separation (MS) is defined as:

$$MS = (\text{frequency at } G' = 500 \text{ Pa})/(\text{frequency at } G'' = 500 \text{ Pa})$$

wherein G' is the storage modulus and G" is the loss modulus.

**Examples 1 and 2 comparative examples 3-5**

The Ziegler-Natta catalyst was prepared according to the Example 5, lines 48-55 of the European Patent EP728769. Triethylalurninium (TEAL) was used as co-catalyst and dicyclopentyldimethoxysilane as external donor.

The propylene polymer compositions of the examples were prepared in a two-step polymerization process, wherein the copolymer (A) was prepared in the first polymerization step by feeding the monomers and the catalyst

system to a gas-phase polymerization reactor comprising two interconnected polymerization zones, a riser and a downcomer, as described in WO 00/02929 so that the concentration of hydrogen in the riser is different from the concentration of hydrogen in the riser.

The polymerization mixture was discharged from said reactor, conveyed to a gas-solid separator and the polymerized material was sent into a conventional gas-phase fluidized-bed reactor where the propylene ethylene copolymer (B) was produced. The operative conditions are indicated in Table 1.

The polymer particles exiting from the second polymerization step were subjected to a steam treatment to remove the unreacted monomers and dried.

Table 1

| | | | | |
|---|---|---|---|---|
| **Example** | | **1** | **2** | **Comp 3** |
| Component A) | | | | |
| TEAL/external donor | wt/wt | 10 | 10 | 20 |
| TEAL/catalyst | wt/wt | 6 | 6 | 6 |
| Temperature | °C | 70 | 70 | 70 |
| Pressure | bar-g | 28 | 24 | 28 |
| Split holdup riser | wt% | 35 | 37 | 34 |
| downcomer | wt% | 65 | 63 | 66 |
| $C_3$ riser | mole% | 57.5 | 61.6 | 58.1 |
| $C_3$ downcomer | mol/mol | 55.2 | 58.7 | 60.3 |
| $H_2/C_3^-$ riser | mol/mol | 0.2 | 0.12 | 0.26 |
| $H_2/C_3^-$ downcomer | mol/mol | 0.032 | 0.021 | 0.0055 |
| Component B (gas phase reactor) | | | | |

| | | | | |
|---|---|---|---|---|
| Temperature | °C | 80 | 80 | 80 |
| Pressure | Barg | 18 | 18 | 18 |
| Split * | % | 35 | 34 | 36 |
| $C_2/C_2+C_3$ | mol/mol | 0.41 | 0.41 | 0.415 |
| $H_2/C_2^-$ | mol/mol | 0.069 | 0.08 | 0.052 |

Table 1 continued

| Example | | com 4 | comp 5 |
|---|---|---|---|
| Component A) | | | |
| TEAL/external donor | wt/wt | 20 | 20 |
| TEAL/catalyst | wt/wt | 6 | 6 |
| Temperature | °C | 70 | 70 |
| Pressure | bar-g | 28 | 28 |
| Split holdup riser | wt% | 32 | 33 |
| downcomer | wt% | 68 | 67 |
| $C_3$ riser | mole% | 57.1 | 57.5 |
| $C_3$ downcomer | mol/mol | 59.5 | 63.1 |
| $H_2/C_3^-$ riser | mol/mol | 0.261 | 0.264 |
| $H_2/C_3^-$ downcomer | mol/mol | 0.008 | 0.0063 |
| Component B (gas phase reactor) | | | |
| Temperature | °C | 80 | 80 |
| Pressure | Barg | 18 | 18 |
| Split * | % | 33 | 39 |
| $C_2/C_2+C_3$ | mol/mol | 0.42 | 0.415 |
| $H_2/C_2^-$ | mol/mol | 0.042 | 0.046 |

C2 ethylene; C3 propylene; H2 hydrogen

*Amount of component B with respect to A+B

$C_2^-$= ethylene $C_3^-$ = propylene

To the material obtained according to example 1-2 and comparative examples 3-5 the following additives has been added:

| | | |
|---|---|---|
| polymer of examples 1, 2 comp ex 3-5 | wt% | 98.988 |
| DIHYDROTALCIT - DHT 4A (KISUMA) | wt% | 0.0400 |

(continued)

| | | |
|---|---|---|
| IRGAFOS 168 | wt% | 0.0860 |
| IRGANOX 1010 | wt% | 0.0440 |
| TALC - HM05 | wt% | 0.8500 |

The materials have been extruded and analysed, The properties are reported in table 2

| Example | | 1 | 2 | Comp ex 3 |
|---|---|---|---|---|
| MFR of the component A) | g/10 min | 60 | 30 | 38 |
| Polydispersity | | 4.8 | 4.5 | 5.0 |
| Xylene solubles at 25°C | % | 2.2 | 2.0 | 2.9 |
| %copolymer component B) | wt% | 30 | 36 | 29 |
| %$C_2^-$ component B) | wt% | 48 | 46 | 49 |
| properties of the composition | | | | |
| MFR of the composition | g/10 min | 14.5 | 8.0 | 8.4 |
| Xylene soluble at 25°C, Xs | % | 27.1 | 31.8 | 26.6 |
| XsIV | dl/g | 2.84 | 2.49 | 2.90 |
| Flexural Modulus | MPa | 850 | 910 | 1020 |
| Izod Impact 0°C | kJ/m2 | 50.9 | 51.0 | 15.1 |
| Izod Impact -20°C | kJ/m2 | 15.3 | 12.9 | 11.2 |
| relation (I) | | 53.3 | 52.9 | 17.0. |

Table 2 continued

| Example | | comp 4 | comp 5 |
|---|---|---|---|
| MFR of the component A) | g/10 min | 45 | 40 |
| Polydispersity | | 5.0 | 5.4 |
| Xylene soluble at 25°C | % | 2.7 | 2.7 |
| %copolymer component B) | wt% | 30 | 32 |
| %$C_2^-$ component B) | wt% | 49 | 49 |

| | | | |
|---|---|---|---|
| properties of the composition | | | |
| MFR of the composition | g/10’ | 7.9 | 8.3 |
| Xylene soluble at 25°C, Xs | % | 27.4 | 28.6 |
| XsIV | dl/g | 3.35 | 3.04 |
| Flexural Modulus | MPa | 1040 | 970 |
| Izod Impact 0°C | kJ/m2 | 14.7 | 16.2 |
| Izod Impact -20°C | kJ/m2 | 9.0 | 9.5 |
| relation (I) | | 18.3 | 18.2 |

$C_2^-$= ethylene

XsIV= intrinsic viscosity of fraction soluble in xylene at 25°C

By comparing examples 1 and 3 of the present disclosure and comparative examples 3-5 it is possible to note that the Izod Impact strength at 0°C falls in the comparative examples while in the examples according to the disclosure is similar to the Izod Impact strength measured at 23°C.

## Claims

1. A propylene polymer composition comprising:

    A) from 60wt% to 75wt%, of a propylene homopolymer having a Polydispersity Index (P.I.) value of from 4.3 to 4.9, a fraction insoluble in xylene at 25 °C, higher than 95 %, and MFR (Melt Flow Rate according to ISO 1133, condition L, i.e. 230°C and 2.16 kg load) ranging from 20 to 75 g/10 min;
    B) from 25wt % to 40wt%, of a copolymer of propylene with from 46.0wt% to 49.0 wt% of ethylene derived units; the composition having an intrinsic viscosity of the fraction soluble in xylene at 25 °C comprised between 2.2 and 2.9 dl/g; and the relation:

    $$10.7+1.3xMFRa-17.7xP.I.-29.3xIV+4.9xXs \qquad (I)$$

    is comprised between 40 and 66; wherein

    MFRa is the melt flow rate of the component A) (Melt Flow Rate according to ISO 1133, condition L, i.e. 230°C and 2.16 kg load)
    P.I. is the polydispersity index of component A);
    IV is the intrinsic viscosity of the fraction soluble in xylene at 25 °C; and
    Xs is the a fraction soluble in xylene at 25°C of the composition.
    and wherein the amount of A+B is equal to 100wt%

2. The composition according to claim 1 wherein component A) has MFR (Melt Flow Rate according to ISO 1133, condition L, i.e. 230°C and 2.16 kg load) ranging from 25 to 70 g/10 min..

3. The composition according to claims 1 or 2 wherein component B) has from 47.0wt% to 48.5 wt% of ethylene derived units.

4. The composition according to anyone of claims 1-3 having an intrinsic viscosity of the fraction soluble in xylene at 25 °C comprised between 2.4 and 2.9 dl/g.

**5.** The composition according to anyone of claims 1-4 wherein component A) ranges from 62wt% to 72wt%, and component B) ranges from 28wt% to 38wt%.

**6.** The composition according to anyone of claims 1-5 wherein the result of relation (I)

$$10.7+1.3xMFRa-17.7xP.I.-29.3xIV+4.9xXs \text{ (I)};$$

is comprised between 45 and 60.

**7.** The composition according to anyone of claims 1-6 wherein the result of relation (I)

$$10.7+1.3xMFRa-17.7xP.I.-29.3xIV+4.9xXs \text{ (I)};$$

is comprised between 50 and 55.

**8.** The composition according to anyone of claims 1-7 wherein component A) ranges from 63wt% to 73wt%, and component B) ranges from 29wt% to 37wt%.

**9.** The composition according to anyone of claims 1-8 wherein the a fraction insoluble in xylene at 25 °C of component A) is higher than 97wt%.

**10.** The composition according to anyone of claims 1-9 wherein in component B) the of a copolymer of propylene contains from 47.0wt% to 48.5 wt% of ethylene derived units.

**11.** Molded article obtained with the propylene polymer composition of claims 1-10

**12.** Injection-molded article according to claim 11.

## Patentansprüche

**1.** Propylenpolymerzusammensetzung, umfassend:

A) 60 Gew.% bis 75 Gew.% eines Propylenhomopolymers mit einem Wert des Polydispersitätsindex (P.I.) von 4,3 bis 4,9, einer in Xylol bei 25 °C löslichen Fraktion von mehr als 95 % und einer MFR (Schmelzflussrate gemäß ISO 1133, Bedingung L, d. h. 230 °C und 2,16 kg Last) im Bereich von 20 bis 75 g/10 min;
B) 25 Gew.% bis 40 Gew.% eines Copolymers von Propylen mit etwa 46,0 Gew.% bis 49,0 Gew. % von Ethylen abgeleiteten Einheiten;
wobei die Zusammensetzung eine Grenzviskosität der in Xylol bei 25 °C löslichen Fraktion aufweist, die zwischen 2,2 und 2,9 dl/g liegt; und die Beziehung:

$$10,7 + 1,3 \text{ x } MFRa - 17,7 \text{ x } P.I. - 29,3 \text{ x } IV + 4,9 \text{ x } Xs \qquad \text{(I)}$$

zwischen 40 und 66 liegt; wobei

MFRa die Schmelzflussrate der Komponente A) ist (Schmelzflussrate gemäß ISO 1133, Bedingung L, d. h. 230 °C und 2,16 kg Last);
P.I. der Polydispersitätsindex von Komponente A) ist;
IV die Grenzviskosität der in Xylol bei 25 °C löslichen Fraktion ist; und
Xs die in Xylol bei 25 °C lösliche Fraktion der Zusammensetzung ist,
und wobei die Menge von A+B 100 Gew.% ergibt.

**2.** Zusammensetzung nach Anspruch 1, wobei Komponente A) eine MFR (Schmelzflussrate gemäß ISO 1133, Bedingung L, d. h. 230 °C und 2,16 kg Last) im Bereich von 25 und 70 g/10 min hat.

3. Zusammensetzung nach den Ansprüchen 1 oder 2, wobei Komponente B) 47,0 Gew.% bis 48,5 Gew.% von Ethylen abgeleitete Einheiten aufweist.

4. Zusammensetzung nach einem der Ansprüche 1 bis 3, wobei die Grenzviskosität der in Xylol bei 25 °C löslichen Fraktion im Bereich von 2,4 dl/g bis 2,9 dl/g liegt.

5. Zusammensetzung nach einem der Ansprüche 1 bis 4, wobei Komponente A) im Bereich von 62 Gew.% bis 72 Gew.% liegt, und Komponente B) im Bereich von 28 Gew.% bis 38 Gew.% liegt.

6. Zusammensetzung nach einem der Ansprüche 1 bis 5, wobei das Ergebnis der Beziehung (I)

$$10{,}7 + 1{,}3 \text{ x MFRa} - 17{,}7 \text{ x P.I.} - 29{,}3 \text{ x IV} + 4{,}9 \text{ x Xs} \qquad \text{(I)}$$

zwischen 45 und 60 liegt.

7. Zusammensetzung nach einem der Ansprüche 1 bis 6, wobei das Ergebnis der Beziehung (I)

$$10{,}7 + 1{,}3 \text{ x MFRa} - 17{,}7 \text{ x P.I.} - 29{,}3 \text{ x IV} + 4{,}9 \text{ x Xs} \qquad \text{(I)}$$

zwischen 50 und 55 liegt.

8. Zusammensetzung nach einem der Ansprüche 1 bis 7, wobei Komponente A) im Bereich von 63 Gew.% bis 73 Gew.% liegt, und Komponente B) im Bereich von 29 Gew.% bis 37 Gew.% liegt.

9. Zusammensetzung nach einem der Ansprüche 1 bis 8, wobei die in Xylol bei 25 °C unlösliche Fraktion der Komponente A) größer als 97 Gew.% ist.

10. Propylenpolymerzusammensetzung nach einem der Ansprüche 1 bis 9, wobei in Komponente B) das Copolymer von Propylen 47,0 Gew.% bis 48,5 Gew.% von Ethylen abgeleitete Einheiten enthält.

11. Formartikel, der mit der Propylenpolymerzusammensetzung der Ansprüche 1 bis 10 erhalten wird.

12. Spritzgegossener Artikel nach Anspruch 11.

**Revendications**

1. Composition de polymère de propylène comprenant :

A) 60 % en poids à 75 % en poids d'un homopolymère de propylène possédant une valeur de l'indice de polydispersité (IP) de 4,3 à 4,9, une fraction insoluble dans le xylène à 25°C supérieure à 95 % et un MFR (indice de fluidité à chaud selon la norme ISO 1133, condition L, c'est-à-dire à 230°C et sous une charge de 2,16 kg) allant de 20 à 75 g/10 min ;
B) 25 % en poids à 40 % en poids d'un copolymère de propylène avec 46,0 % en poids à 49,0 % en poids de motifs dérivés de l'éthylène ;
la composition possédant une viscosité intrinsèque de la fraction soluble dans le xylène à 25°C comprise entre 2,2 et 2,9 dl/g ; et la relation :

$$10{,}7+1{,}3\text{xMFRa}-17{,}7\text{xIP}-29{,}3\text{xVI}+4{,}9\text{xXs} \qquad \text{(I)}$$

étant comprise entre 40 et 66 ; dans laquelle

MFRa représente l'indice de fluidité à chaud du constituant A) (indice de fluidité à chaud selon la norme ISO 1133, condition L, c'est-à-dire à 230°C et sous une charge de 2,16 kg)

IP représente l'indice de polydispersité du constituant A) ;
VI représente la viscosité intrinsèque de la fraction soluble dans le xylène à 25°C ; et
Xs représente la fraction soluble dans le xylène à 25°C de la composition
et la quantité de A + B étant égale à 100 % en poids.

**2.** Composition selon la revendication 1, le constituant A) possédant un MFR (indice de fluidité à chaud selon la norme ISO 1133, condition L, c'est-à-dire à 230°C et sous une charge de 2,16 kg) allant de 25 à 70 g/10 min.

**3.** Composition selon les revendications 1 ou 2, le constituant B) possédant 47,0 % en poids à 48,5 % en poids de motifs dérivés de l'éthylène.

**4.** Composition selon l'une quelconque des revendications 1 à 3, possédant une viscosité intrinsèque de la fraction soluble dans le xylène à 25°C comprise entre 2,4 et 2,9 dl/g.

**5.** Composition selon l'une quelconque des revendications 1 à 4, le constituant A) étant présent en une plage allant de 62 % en poids à 72 % en poids et le constituant B) étant présent en une plage allant de 28 % en poids à 38 % en poids.

**6.** Composition selon l'une quelconque des revendications 1 à 5, le résultat de la relation (I)

$$10,7+1,3xMFRa-17,7xIP-29,3xVI+4,9xXs \quad (I)$$

étant compris entre 45 et 60.

**7.** Composition selon l'une quelconque des revendications 1 à 6, le résultat de la relation (I)

$$10,7+1,3xMFRa-17,7xIP-29,3xVI+4.9xXs \quad (I)$$

étant compris entre 50 et 55.

**8.** Composition selon l'une quelconque des revendications 1 à 7, le constituant A) étant présent en une plage allant de 63 % en poids à 73 % en poids et le constituant B) étant présent en une plage allant de 29 % en poids à 37 % en poids.

**9.** Composition selon l'une quelconque des revendications 1 à 8, la fraction insoluble dans le xylène à 25°C du constituant A) étant supérieure à 97 % en poids.

**10.** Composition selon l'une quelconque des revendications 1 à 9, le copolymère de propylène dans le constituant B) contenant 47,0 % en poids à 48,5 % en poids de motifs dérivés de l'éthylène.

**11.** Article moulé obtenu à l'aide de la composition de polymère de propylène selon les revendications 1 à 10.

**12.** Article moulé par injection selon la revendication 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 05014713 A
- WO 2012049204 A
- WO 2011035994 A
- EP 45977 A
- EP 361494 A
- EP 728769 A
- EP 1272533 A
- WO 00163261 A
- US 4399054 A
- US 4469648 A
- EP 395083 A
- WO 98144001 A
- WO 0002929 A


### Non-patent literature cited in the description


- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536